# EUROPEAN PATENT APPLICATION

(11) **EP 4 510 529 A1**
(43) Date of publication of application: **19.02.2025**
(21) Application number: 23795279.1
(22) Date of filing: 23.04.2023
(51) Int. Cl.: H04L 47/32, H04W 28/06

(54) **COMMUNICATION METHOD AND APPARATUS**

(30) Priority: 29.04.2022 CN 202210467844
(71) Applicant: Huawei Technologies Co., Ltd., Shenzhen, Guangdong 518129 (CN)
(72) Inventor: FAN, Qiang, Shenzhen, Guangdong 518129 (CN); TANG, Xiaowei, Shenzhen, Guangdong 518129 (CN); WANG, Jue, Shenzhen, Guangdong 518129 (CN)
(74) Representative: Epping - Hermann - Fischer
(86) International application number: PCT/CN2023/090065
(87) International publication number: WO 2023/207846

(57) **Abstract**

Embodiments of this application provide a communication method and apparatus. The method includes: A first device (for example, a terminal device or a network device) determines that a first data frame is lost. The first device discards a first data packet received from an upper layer, where the first data packet is a part of or all data packets in a second data frame, the second data frame is located after the first data frame, and the second data frame is associated with the first data frame. According to the method disclosed in this application, a data frame transmission failure is identified, and proactive discarding of a data packet in a subsequent data frame associated with the lost data frame is triggered, to avoid a waste of air interface resources and transmission resources, reduce execution of unnecessary decoding operations, and reduce power consumption of the device while improving resource utilization.

## Description

This application claims priority to Chinese Patent Application No. 202210467844.1, filed with the China National Intellectual Property Administration on April 29, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

With continuous development of a communication system, a data transmission delay is continuously reduced, and a transmission capacity is increasingly large. A 5th generation (5th generation, 5G) communication system gradually extends to some multimedia services requiring high real-time performance, for example, video transmission, cloud gaming (cloud gaming, CG), extended reality (extended reality, XR), tactile Internet (tactile Internet, TI), and the like.

XR video frames are transmitted through a group of pictures (group of pictures, GOP) model, and the communication system needs to provide transmission services based on quality of service (quality of service, QoS) requirements of services. If a reference frame fails to be transmitted during transmission, correct decoding cannot be implemented on a receive side even if a subsequent video frame that depends on the reference frame is successfully transmitted. In this case, if the communication system still continues to transmit a subsequent dependent frame, a waste of air interface resources and transmission resources is caused.

### SUMMARY

This application provides a communication method and apparatus, which can identify a data frame transmission failure, and trigger proactive frame discarding, to avoid a waste of air interface resources and transmission resources.

According to a first aspect, a communication method is provided. The method includes: A first device determines that a first data frame is lost. The first device discards a first data packet received from an upper layer, where the first data packet is a part of or all data packets in a second data frame, the second data frame is located after the first data frame, and the second data frame is associated with the first data frame.

The data frame includes an uplink data frame and a downlink data frame. In this embodiment of this application, the first data frame may be a first uplink data frame, or may be a first downlink data frame. Similarly, the second data frame may be a second uplink data frame or a second downlink data frame.

For example, the first data frame may be an I frame or a P frame in a GOP. The I frame is an important frame that can be independently encoded and decoded, and may be used as a reference frame of the P frame. That the first data frame is lost may be understood as that the part of or all the data packets in the first data frame are lost. This is not specifically limited in this application. It should be noted that the first device may be a terminal device (for example, a user equipment (user equipment, UE)) or a network device (for example, a base station), or may be a chip or a circuit used in the first device. This is not limited in this application.

For example, after detecting the loss of the part of the data packets in the first data frame, the terminal device proactively discards the first data packet subsequently received from the upper layer (for example, an application layer (application layer, APP layer), a non-access stratum (non-access stratum, NAS), or a service data adaptation protocol (service data adaptation protocol, SDAP) layer), to avoid a waste of air interface resources and transmission resources caused by continued transmission, or avoid execution of unnecessary decoding operations.

According to the solution provided in this application, after identifying a data frame transmission failure, the first device triggers proactive discarding of a data packet in a data frame associated with the lost data frame, to ensure user experience, avoid a waste of air interface resources and transmission resources, reduce execution of unnecessary decoding operations, and reduce power consumption of the device while improving resource utilization.

With reference to the first aspect, in some implementations of the first aspect, that the second data frame is associated with the first data frame includes: all data packets in the first data frame and the second data frame are transmitted in a same time unit; or all data packets in the first data frame and the second data frame are data packets before arrival of a data packet in a third data frame, where a data radio bearer (data radio bearer, DRB) or QoS flow (QoS flow) to which the third data frame is mapped is different from a DRB or QoS flow to which the second data frame is mapped.

It should be understood that the same time unit may be in a same GOP (for example, a GOP #1), and the first data frame and the second data frame each may be an I frame or a P frame in the same GOP. In this case, the third frame is an I frame in a next GOP (for example, a GOP #2). Alternatively, the first data frame may be an I frame mapped to a first DRB or the QoS flow, or the first data frame may be a P frame mapped to a second DRB or the QoS flow, the second data frame is a P frame mapped to the second DRB or the QoS flow, and the third data frame is an I frame mapped to the first DRB or the QoS flow.

With reference to the first aspect, in some implementations of the first aspect, when the first device is a terminal device and a second device is a network device, the first device sends capability reporting information to the second device, where the capability reporting information indicates that the first device supports proactive frame discarding; and the first device receives configuration information from the second device, where the configuration information is for configuring a proactive frame discarding function.

With reference to the first aspect, in some implementations of the first aspect, that a first device determines that a first data frame is lost includes: When a timer that corresponds to a second data packet and that is maintained by a packet data convergence protocol (packet data convergence protocol, PDCP) entity of the first device expires, and the second data packet is not successfully transmitted, the PDCP entity of the first device determines that the first data frame is lost, where the second data packet is a part of or all data packets in the first data frame.

With reference to the first aspect, in some implementations of the first aspect, that the second data packet is not successfully transmitted meets at least one of the following: a PDCP service data unit (service data unit, SDU) or PDCP protocol data unit (protocol data unit, PDU) corresponding to the second data packet has not been delivered to a radio link control (radio link control, RLC) entity; the PDCP PDU is delivered to the RLC entity, and an RLC SDU corresponding to the PDCP PDU or a segment of the RLC SDU is not sent; after the RLC SDU corresponding to the PDCP PDU or the segment of the RLC SDU is transmitted most recently, the first device receives an RLC NACK corresponding to the RLC SDU or the segment of the RLC SDU; and after at least one media access control (media access control, MAC) protocol data unit PDU corresponding to the PDCP PDU is transmitted most recently, the first device receives a hybrid automatic repeat request (hybrid automatic repeat request, HARQ) negative acknowledgment NACK corresponding to the at least one MAC PDU.

It should be noted that the RLC NACK is feedback information that is for one RLC SDU or one segment of the RLC SDU and that is in an RLC status report fed back by the RLC entity in an AM (acknowledge mode) mode. The RLC NACK indicates that a corresponding RLC SDU or a segment of the RLC SDU is not received on a receive side.

With reference to the first aspect, in some implementations of the first aspect, that the first device discards a first data packet received from an upper layer includes: The PDCP entity of the first device discards the first data packet received from the upper layer.

For example, the first data packet may be a PDCP SDU.

With reference to the first aspect, in some implementations of the first aspect, that the first device discards a data packet received from an upper layer includes: An SDAP entity of the first device discards the first data packet received from the upper layer.

For example, the first data packet may be an SDAP SDU.

With reference to the first aspect, in some implementations of the first aspect, that an SDAP entity of the first device discards the data packet received from the upper layer includes: The SDAP entity of the first device receives first indication information from the PDCP entity of the first device, where the first indication information notifies that the first data frame is lost; and the SDAP entity of the first device discards, based on the first indication information, the first data packet received from the upper layer.

With reference to the first aspect, in some implementations of the first aspect, the first device sends second indication information to the second device, where the second indication information indicates that the first data frame is lost, and the second indication information includes at least one of the following: DRB information corresponding to the first data frame, QoS flow information corresponding to the first data frame, and a PDCP counter COUNT value or a PDCP serial number (serial number, SN). The PDCP COUNT or the PDCP SN indicates to update a status variable of a receive window of the second device.

Based on the foregoing solution, an uplink frame is used as an example. After detecting that the uplink frame is lost, a PDCP entity of the UE may notify a PDCP entity of the base station to perform proactive packet discarding and window updating, to avoid a case in which the base station continues to transmit a useless data packet that cannot be decoded at the application layer. In addition, if the base station does not perform proactive packet discarding and window updating in a timely manner, when the UE transmits data to the base station again after completing proactive frame discarding, a problem such as garbled characters or a sequence error may occur in a data packet in a receive buffer of the PDCP entity of the base station, causing an unnecessary reordering delay.

According to a second aspect, a communication method is provided. The method may be performed by a first device (for example, a terminal device or a network device), or may be performed by a chip or a circuit used in the first device. This is not limited in this application. For ease of description, descriptions are provided below by using an example in which the method is performed by the first device.

The method includes: The first device determines that a first data frame is lost. The first device sends indication information to a second device, where the indication information indicates to discard a first data packet received from an upper layer, where the first data packet is a part of or all data packets in a second data frame, the second data frame is located after the first data frame, and the second data frame is associated with the first data frame.

According to the solution provided in this application, after identifying a data frame transmission failure, the first device indicates the second device to discard a data packet in a data frame associated with the lost data frame, to avoid a waste of air interface resources and transmission resources, reduce execution of unnecessary decoding operations, and reduce power consumption of the device while improving resource utilization.

With reference to the second aspect, in some implementations of the second aspect, that the second data frame is associated with the first data frame includes: all data packets in the first data frame and the second data frame are transmitted in a same time unit; or all data packets in the first data frame and the second data frame are data packets before arrival of a data packet in a third data frame, where a DRB or QoS flow to which the third data frame is mapped is different from a DRB or QoS flow to which the second data frame is mapped.

With reference to the second aspect, in some implementations of the second aspect, when the first device is a terminal device and the second device is a network device, the first device sends capability reporting information to the second device, where the capability reporting information indicates that the first device supports proactive frame discarding; and the first device receives configuration information from the second device, where the configuration information is for configuring a proactive frame discarding function.

With reference to the second aspect, in some implementations of the second aspect, that the first device determines that a first data frame is lost includes: When a reordering timer (t-reordering timer) of a packet data convergence protocol PDCP entity of the first device expires, the PDCP entity of the first device determines that the first data frame is lost.

With reference to the second aspect, in some implementations of the second aspect, that the first device determines that a first data frame is lost includes: An application layer of the first device determines that the first data frame is lost.

With reference to the second aspect, in some implementations of the second aspect, that the first device sends indication information to a second device includes: The application layer of the first device sends the indication information to an access stratum of the first device; and the access stratum of the first device sends the indication information to the second device.

With reference to the second aspect, in some implementations of the second aspect, that the first device sends first indication information to a second device includes: When the first device is of a central unit (central unit, CU)-distributed unit (distributed unit, DU) split architecture, a CU of the first device sends the first indication information to a DU of the first device; and the DU of the first device sends the first indication information to the second device.

With reference to the second aspect, in some implementations of the second aspect, the first indication information includes at least one of the following: first DRB information/QoS flow information corresponding to the first data frame, duration information of the second data frame, a quantity of second data frames, second DRB information/QoS flow information corresponding to the second data frame, and PDCP COUNT or a PDCP SN.

Based on the foregoing solution, a downlink frame is used as an example. A PDCP entity of a base station may notify a PDCP entity of a UE to perform proactive packet discarding and window updating, to avoid a case in which the UE continues to transmit a useless data packet.

According to a third aspect, a communication method is provided. The method may be performed by a second device (for example, a network device or a terminal device), or may be performed by a chip or a circuit used in the second device. This is not limited in this application. For ease of description, descriptions are provided below by using an example in which the method is performed by the second device.

The method includes: The second device receives indication information from a first device, where the indication information indicates to discard a first data packet received from an upper layer, where the first data packet is a part of or all data packets in a second data frame, the second data frame is located after the first data frame, the second data frame is associated with the first data frame, and the first data frame is a lost data frame determined by the first device. The second device discards, based on the indication information, the first data packet received from the upper layer.

According to the solution provided in this application, the second device receives the indication information and discards, based on the indication information, a data packet in a data frame associated with the lost data frame, to avoid a waste of air interface resources and transmission resources, reduce execution of unnecessary decoding operations, and reduce power consumption of the device while improving resource utilization.

With reference to the third aspect, in some implementations of the third aspect, that the second data frame is associated with the first data frame includes: all data packets in the first data frame and the second data frame are transmitted in a same time unit; or all data packets in the first data frame and the second data frame are data packets before arrival of a data packet in a third data frame, where a DRB or QoS flow to which the third data frame is mapped is different from a DRB or QoS flow to which the second data frame is mapped.

With reference to the third aspect, in some implementations of the third aspect, when the first device is a terminal device and the second device is a network device, the second device receives capability reporting information from the second device, where the capability reporting information indicates that the first device supports proactive frame discarding; and the second device sends configuration information to the second device, where the configuration information is for configuring a proactive frame discarding function.

With reference to the third aspect, in some implementations of the third aspect, that the second device discards, based on the indication information, the first data packet received from the upper layer includes: A PDCP entity of the second device discards, based on the indication information, the first data packet received from the upper layer.

With reference to the third aspect, in some implementations of the third aspect, that the second device discards, based on the indication information, the first data packet received from the upper layer includes: A service data adaptation protocol SDAP entity of the second device discards, based on the indication information, the first data packet received from the upper layer.

With reference to the third aspect, in some implementations of the third aspect, first indication information includes at least one of the following: first DRB information or first QoS flow information corresponding to the first data frame, duration information of the second data frame, a quantity of second data frames, second DRB information or second QoS flow information corresponding to the second data frame, and PDCP COUNT or a PDCP SN.

According to a fourth aspect, a communication apparatus is provided. The apparatus may be a first device (for example, a terminal device or a network device). The apparatus includes: a processing unit, configured to determine that a first data frame is lost, and discard a first data packet received from an upper layer, where the first data packet is a part of or all data packets in a second data frame, the second data frame is located after the first data frame, and the second data frame is associated with the first data frame.

Specifically, the processing unit may perform processing other than receiving/sending processing in the first aspect. Optionally, the apparatus further includes a transceiver unit. The transceiver unit may perform receiving/sending processing in the first aspect.

According to a fifth aspect, a communication apparatus is provided. The apparatus may be a first device (for example, a terminal device or a network device). The apparatus includes: a processing unit, configured to determine that a first data frame is lost; and a transceiver unit, configured to send indication information to a second device, where the indication information indicates to discard a first data packet received from an upper layer, where the first data packet is a part of or all data packets in a second data frame, the second data frame is located after the first data frame, and the second data frame is associated with the first data frame.

Specifically, the transceiver unit may perform receiving/sending processing in the second aspect, and the processing unit may perform processing other than receiving/sending processing in the second aspect.

According to a sixth aspect, a communication apparatus is provided. The apparatus may be a second device (for example, a network device or a terminal device). The apparatus includes: a transceiver unit, configured to receive indication information from a first device, where the indication information indicates to discard a first data packet received from an upper layer, where the first data packet is a part of or all data packets in a second data frame, the second data frame is located after the first data frame, the second data frame is associated with the first data frame, and the first data frame is a lost data frame determined by the first device; and a processing unit, configured to discard, based on the indication information, the first data packet received from the upper layer.

Specifically, the transceiver unit may perform receiving/sending processing in the third aspect, and the processing unit may perform processing other than receiving/sending processing in the third aspect.

According to a seventh aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, to enable the communication apparatus to perform the method in any one of the first aspect to the third aspect and any possible implementation of the first aspect to the third aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to an eighth aspect, an embodiment of this application provides a communication system, including a first device and/or a second device.

According to a ninth aspect, a computer-readable storage medium is provided. The computer-readable storage medium stores a computer program or code. When the computer program or code is run on a computer, the computer is enabled to perform the method in any one of the first aspect to the third aspect and any possible implementation of the first aspect to the third aspect.

According to a tenth aspect, a chip is provided, including at least one processor. The at least one processor is coupled to a memory, the memory is configured to store a computer program, and the processor is configured to invoke the computer program from the memory and run the computer program, to enable a communication apparatus on which the chip system is installed to perform the method in any one of the first aspect to the third aspect and any possible implementation of the first aspect to the third aspect.

The chip may include an input circuit or interface configured to send information or data, and an output circuit or interface configured to receive information or data.

According to an eleventh aspect, a computer program product is provided. The computer program product includes computer program code. When the computer program code is run on a communication apparatus, the network device is enabled to perform the method in any one of the first aspect to the third aspect and any possible implementation of the first aspect to the third aspect.

### BRIEF DESCRIPTION OF DRAWINGS

FIG. 1 is a diagram of a structure of a network architecture according to an embodiment of this application;
FIG. 2 is a diagram of a structure of a group of pictures according to an embodiment of this application;
FIG. 3 is a schematic flowchart of a first communication method according to an embodiment of this application;
FIG. 4 is a schematic flowchart of a second communication method according to an embodiment of this application;
FIG. 5 is a schematic flowchart of a third communication method according to an embodiment of this application;
FIG. 6 is a schematic flowchart of a fourth communication method according to an embodiment of this application;
FIG. 7 is a schematic flowchart of a fifth communication method according to an embodiment of this application;
FIG. 8 is a schematic flowchart of a sixth communication method according to an embodiment of this application;
FIG. 9 is a schematic flowchart of a seventh communication method according to an embodiment of this application;
FIG. 10 is a schematic flowchart of an eighth communication method according to an embodiment of this application;
FIG. 11 is a schematic flowchart of a ninth communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system or a new radio (new radio, NR) system, or another evolved communication system. The technical solutions provided in this application may be further applied to a future communication system, for example, a 6th generation 6G mobile communication system.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as a vehicle to X device (vehicle to X, V2X, X can stand for everything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

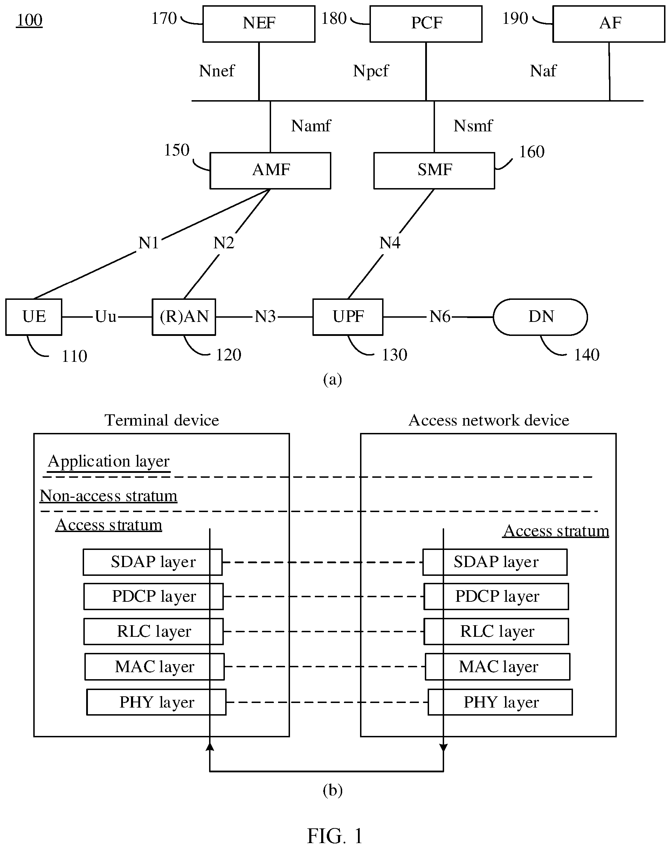

FIG. 1 is a diagram of a structure of a network architecture 100 according to an embodiment of this application. As shown in (a) in FIG. 1, the network architecture is, for example, a 5G system (5th generation system, 5GS), and includes but is not limited to: a user equipment 110, a (radio) access network (radio access network, (R)AN) device 120, a user plane network element (for example, a user plane function (user plane function, UPF) network element) 130, a data network (data network, DN) 140, an access management network element (for example, an access and mobility management function (access and mobility management function, AMF) network element) 150, a session management network element (for example, a session management function (session management function, SMF) network element) 160, a network exposure network element (for example, a network exposure function (network exposure function, NEF) network element) 170, a policy control network element 180 (for example, a policy control function (policy control function, PCF) network element), an application network element (for example, an application function (application function, AF) network element) 190, and the like.

The following separately describes some network elements in the network architecture.

### 1. User equipment UE 110:

The UE accesses a 5G network mainly via a radio air interface and obtains services. The UE interacts with a radio access network (radio access network, RAN) via the air interface, and interacts with an AMF of a core network via non-access stratum (non-access stratum, NAS) signaling.

The user equipment may also be referred to as a terminal device, a terminal, an access terminal, a subscriber unit, a subscriber station, a mobile station, a remote station, a remote terminal, a mobile device, a user terminal, a ratio communication device, a user agent, or a user apparatus. The terminal in embodiments of this application may be a mobile phone, a tablet computer, a computer having a wireless transceiver function, an XR terminal, a virtual reality (virtual reality, VR) terminal, an augmented reality (augmented reality, AR) terminal, a mixed reality (mixed reality, MR) terminal, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in the 5G network, a terminal in a future evolved network, or the like.

It should be noted that a specific technology used by the UE and a specific device form of the UE are not specifically limited in this application.

It should be noted that the terminal device and the access network device may communicate with each other by using an air interface technology (for example, an NR technology or an LTE technology). Terminal devices may also communicate with each other by using an air interface technology (for example, an NR technology or an LTE technology).

### 2. (Radio) access network device 120:

The access network device may also be referred to as an access device. The (R)AN is responsible for functions such as radio resource management, quality of service QoS management, data compression and encryption, and the like on an air interface side, may provide an access service for an authorized user equipment in a specific area, and complete forwarding of user equipment data between a user equipment and a core network. Specifically, the access network device may include an access point in a 3rd generation partnership project (3rd generation partnership project, 3GPP) network, or may include an access point in a non-3GPP (non-3GPP) network. The (R)AN may also be understood as a base station in a network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved base station (home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, such as a BBU or a distributed unit (distributed unit, DU), that constitutes a gNB or a transmission point. It may be understood that all or some functions of the access network device in this application may alternatively be implemented by using a software function running on hardware, or may be implemented by using an instantiated virtualization function on a platform (for example, a cloud platform).

It should be understood that communication between the access network device and a terminal device complies with a structure of a protocol layer. For example, a structure of a control plane protocol layer may include a radio resource control (radio resource control, RRC) layer, a packet data convergence protocol PDCP layer, an RLC layer, a MAC layer, and a physical (physical, PHY) layer. A structure of a user plane protocol layer may include a PDCP layer, an RLC layer, a MAC layer, and a PHY layer, and in a possible implementation, there may also be a service data adaptation protocol SDAP layer above the PDCP layer.

Data transmission between the access network device and the terminal device is used as an example. Data transmission needs to pass through the user plane protocol layer, for example, the SDAP layer, the PDCP layer, the RLC layer, the MAC layer, and the PHY layer. The SDAP layer, the PDCP layer, the RLC layer, the MAC layer, and the PHY layer may also be collectively referred to as an access stratum. For example, at least one DRB is established between the RAN device and the terminal device for data transmission, and each DRB may correspond to a functional entity set, for example, including one PDCP entity, at least one RLC entity corresponding to the PDCP entity, at least one MAC entity corresponding to the at least one RLC entity, and at least one PHY entity corresponding to the at least one MAC entity. Optionally, at least one signaling radio bearer (signaling radio bearer, SRB) may also be established between the RAN device and the terminal device for signaling transmission. The DRB and the SRB may be collectively referred to as a radio bearer (radio bearer, RB).

Downlink data transmission is used as an example. In (b) in FIG. 1, a downward arrow indicates data sending, and an upward arrow indicates data receiving. After obtaining data from an upper layer (for example, an application layer or a non-access stratum), the SDAP entity may map the data to a PDCP entity of a corresponding DRB based on a quality of service flow identifier (quality of service flow indicator, QFI) of the data. The PDCP entity may transfer the data to at least one RLC entity corresponding to the PDCP entity. The at least one RLC entity transmits the data to at least one corresponding MAC entity. The at least one MAC entity generates a transport block. In this way, wireless transmission is performed through a corresponding PHY entity. It should be noted that data is correspondingly encapsulated at each layer. Data received by a layer from an upper layer of the layer is considered as a service data unit SDU of the layer, the data becomes a protocol data unit PDU after being encapsulated at the layer, and then the PDU is transferred to a next layer. For example, data received by the PDCP entity from an upper layer is referred to as a PDCP SDU, and data sent by the PDCP entity to a lower layer is referred to as a PDCP PDU. Data received by the RLC entity from an upper layer is referred to as an RLC SDU, and data sent by the RLC entity to a lower layer is referred to as an RLC PDU. Data transmission may be performed between different layers through corresponding channels. For example, data transmission may be performed between the RLC entity and the MAC entity through a logical channel (logical channel, LCH), and data transmission may be performed between the MAC entity and the PHY entity through a transport channel (transport channel).

In addition, the terminal device further has an application layer and a non-access stratum. The application layer may be configured to provide a service for an application installed on the terminal device. For example, downlink data received by the terminal device may be sequentially transmitted from the PHY layer to the application layer, and the downlink data is provided by the application layer for the application. For another example, the application layer may obtain data generated by the application, sequentially transmit the data to the PHY layer, and send the data to another communication apparatus. The non-access stratum may be configured to forward user data. For example, the non-access stratum forwards uplink data received from the application layer to the SDAP layer, or forwards downlink data received from the SDAP layer to the application layer. In some deployments, the base station may be of a CU-DU split architecture. In other words, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, to implement functions of the RRC layer and the PDCP layer. The DU is responsible for processing a physical layer protocol and a real-time service, to implement functions of the RLC layer, the MAC layer, and the PHY layer. The AAU implements some physical layer processing functions, radio frequency processing, and a function related to an active antenna. Information at the RRC layer is generated by the CU, and is finally encapsulated at the PHY layer of the DU into the information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, and an AAU node. In addition, the CU may be classified as an access network device in an access network, or the CU may be classified as an access network device in a core network (core network, CN). This is not limited in this application.

It should be noted that a specific technology used by the (R)AN and a specific device form of the (R)AN are not specifically limited in this application.

It may be understood that FIG. 1 is merely an example, and does not constitute any limitation on the protection scope of this application. A communication method provided in embodiments of this application may further involve a network element that is not shown in FIG. 1. Certainly, the communication method provided in embodiments of this application may alternatively include only some network elements shown in FIG. 1. In a future communication system, for example, a 6G communication system, the foregoing network element or device may still use a name of the network element or device in a 4G or 5G communication system, or may have another name. This is not limited in embodiments of this application.

A specific structure of an entity for executing the method provided in embodiments of this application is not particularly limited in this application, provided that a program that records code for the method provided in embodiments of this application can be run to perform communication according to the method provided in embodiments of this application. For example, the entity for executing the method provided in embodiments of this application may be a terminal device or a network device, may be a functional module that is in the terminal device or the network device and that can invoke a program and execute the program, or may be a component (for example, a chip or a circuit) that may be used in the terminal device or the network device.

For ease of understanding of embodiments of this application, terms or technologies in this application are briefly described.

### 1. XR

XR refers to various virtual-reality combined environments and human-machine interaction that are generated by wearable devices and computing technologies, and mainly includes virtual-reality interaction technologies such as VR, AR, and MR. To improve experience of interaction between human and a virtual world, an XR service has strict requirements on bandwidth and delay. During downlink transmission, an encoder of a server generates data content at a fixed frequency (for example, 60 Hz or 120 Hz), and transmits the data content to an XR terminal via a core network and a RAN. During uplink transmission, the XR terminal may acquire an image of a current scene through a built-in camera and continuously upload the image of the current scene to the server at a specific frequency (for example, 60 Hz or 120 Hz).

Generally, the XR service periodically generates data frames at a frame rate. For example, a service model of an XR type service in a downlink direction roughly includes AR/VR and cloud gaming CG. An AR/VR frame rate may be 60 fps, to be specific, 60 frames of video images are generated per second, one video frame appears about every 16.66 ms, and a transmission rate is 20 Mbps, 45 Mbps, or the like. Alternatively, an AR/VR frame rate may be 120 fps, to be specific, 120 frames of video images are generated per second, and one video frame appears about every 8.33 ms. An air interface transmission delay budget of a complete video frame is 10 ms. In other words, duration from time at which a base station receives data of a frame of image from a UPF to time at which the base station successfully sends the frame of image to the UE is referred to as the air interface transmission delay budget of the video frame. A CG frame rate may be 60 fps or 120 fps, to be specific, 60 frames of video images are generated per second or 120 frames of video images are generated per second, and a transmission rate is 8 Mbps, 30 Mbps, or the like. An air interface transmission delay budget of a complete video frame is 15 ms.

In addition, in an actual transmission system, an encoding delay of a data frame, a network transmission delay, and the like cause jitter (jitter) at time at which the data frame arrives at a base station side. Generally, it may be considered that the jitter complies with a truncated Gaussian distribution, and a truncated range is approximately [-4 ms, 4 ms]. A size of an XR service data packet complies with probability distribution. The data packet arrives at the base station side at an average periodicity of 1/fps, and jitter at time of arrival of the data packet complies with probability distribution.

With continuous development of the 5G communication system, to meet increasing transmission requirements, some multimedia services with high real-time performance gradually emerge, for example, video transmission, cloud gaming, extended reality, tactile Internet, and the like. For example, for an XR video service, images are generally organized in a unit of GOP during encoding. One GOP is a data stream with encoded images, and starts with an I frame and ends with a next I frame.

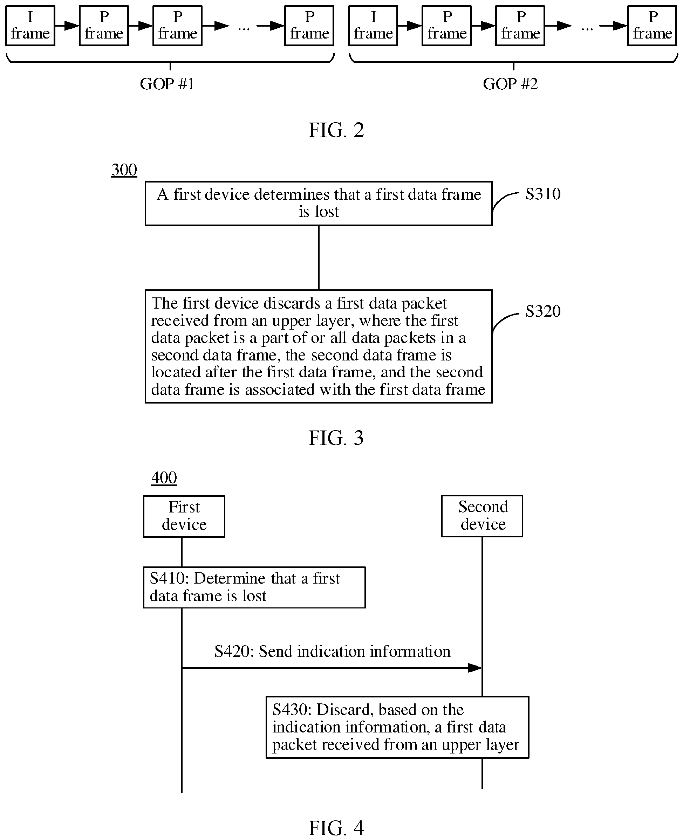

FIG. 2 is a diagram of a structure of a GOP according to an embodiment of this application. As shown in FIG. 2, a GOP sequence (for example, a GOP #1 or a GOP #2) includes an I frame and a plurality of P frames. Optionally, the GOP may further include a B frame. The I frame is an intra frame (intra picture), and may also be referred to as a key frame, an important frame, or the like. The I frame is a reference frame of the P frame and the B frame, and has a feature of independent encoding and decoding. The P frame is a predictive frame (predictive frame), and may also be referred to as a dependent frame, a non-key frame, or the like. To decode the P frame, reference needs to be made to a previous closest I frame or P frame, and the P frame may be a reference frame of a subsequent P frame and/or B frame. The B frame is a bi-directional interpolated prediction frame (bi-directional interpolated prediction frame), and may also be referred to as a dependent frame, a non-key frame, or the like. To decode the B frame, reference needs to be made to a previous closest I frame or P frame and a subsequent closest P frame. It should be understood that, when image quality of the I frame is poor, image quality of a subsequent P frame and B frame in a same GOP (for example, the GOP #1) is affected, and may not be recovered until a next GOP (for example, the GOP #2).

Based on a dependency relationship among I, P, and B frames in a GOP model, if a reference frame fails to be transmitted (for example, a frame delay budget (packet delay budget, PDB) times out but the reference frame still fails to be transmitted) during transmission, correct decoding cannot be implemented on a receive side even if a subsequent video frame that depends on the reference frame is successfully transmitted. In this case, if the communication system still continues to transmit a subsequent dependent frame, an unnecessary waste of air interface resources and transmission energy is caused.

Therefore, how a receive end and a transmit end (for example, a base station and a UE) identify a video frame transmission failure and how to trigger proactive frame discarding to avoid the waste of air interface resources and transmission energy are technical problems that urgently need to be resolved.

In view of this, this application provides a communication method and apparatus. The method includes: When an uplink reference frame transmission failure is detected (by the UE or the base station), the UE may discard a subsequent dependent frame; when a downlink reference frame transmission failure is detected (by the UE or the base station), the base station may discard a subsequent dependent frame; and when the downlink reference frame transmission failure is detected through an application layer of the UE, the UE indicates the base station to perform downlink proactive frame discarding. According to the method disclosed in this application, user experience is ensured, a waste of air interface resources and transmission resources is avoided, and power consumption of the UE or the base station is reduced.

For ease of understanding embodiments of this application, the following descriptions are provided. In embodiments of this application, unless otherwise stated or there is a logic conflict, terms and/or descriptions in different embodiments are consistent and may be mutually referenced, and technical features in different embodiments may be combined to form a new embodiment according to an inherent logical relationship thereof.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the descriptions of this application, the character "/" usually indicates an "or" relationship between the associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

In embodiments of this application, "first", "second", and various numbers are used for differentiation for ease of description, and are not used to limit the scope of embodiments of this application. For example, the terms are used to differentiate between different indication information.

The technical solutions provided in this application are described in detail below with reference to the accompanying drawings.

FIG. 3 is a schematic flowchart of a first communication method 300 according to an embodiment of this application. As shown in FIG. 3, specific implementations include the following steps. S310: A first device determines that a first data frame is lost.

The data frame includes an uplink data frame and a downlink data frame. In this embodiment of this application, the first data frame may be a first uplink data frame, or may be a first downlink data frame. Similarly, a second data frame may be a second uplink data frame or a second downlink data frame.

For example, the first data frame may be an I frame or a P frame in a GOP. The I frame is an important frame that can be independently encoded and decoded, and may be used as a reference frame of the P frame. That the first data frame is lost may be understood as that a part of or all data packets in the first data frame are lost. This is not specifically limited in this application.

It should be noted that the first device may be a terminal device or a network device, or may be a chip or a circuit used in the terminal device or the network device. This is not limited in this application.

In a possible implementation, when a timer that corresponds to a second data packet and that is maintained by a PDCP entity of the first device expires, and the second data packet is not successfully transmitted, the PDCP entity of the first device determines that the first data frame is lost, where the second data packet is a part of or all data packets in the first data frame.

For example, that the second data packet is not successfully transmitted meets at least one of the following: a PDCP SDU or PDCP PDU corresponding to the second data packet has not been delivered to an RLC entity; the PDCP PDU is delivered to the RLC entity, and an RLC SDU corresponding to the PDCP PDU or a segment of the RLC SDU is not sent; after the RLC SDU corresponding to the PDCP PDU or the segment of the RLC SDU is transmitted most recently, the first device receives an RLC NACK corresponding to the RLC SDU or the segment of the RLC SDU; and after at least one MAC PDU corresponding to the PDCP PDU is transmitted most recently, the first device receives a HARQ NACK corresponding to the at least one MAC PDU.

It should be noted that, before the first device determines that the first data frame is lost, if the first device is a terminal device and a second device is a network device, the first device sends capability reporting information to the second device, where the capability reporting information indicates that the first device supports proactive frame discarding; and the first device receives configuration information from the second device, where the configuration information is for configuring a proactive frame discarding function.

S320: The first device discards a first data packet received from an upper layer.

The first data packet is a part of or all data packets in the second data frame, the second data frame is located after the first data frame, and the second data frame is associated with the first data frame. It should be noted that the second data frame being associated with the first data frame includes: all data packets in the first data frame and the second data frame are transmitted in a same time unit; or all data packets in the first data frame and the second data frame are data packets before arrival of a data packet in a third data frame, where a DRB or QoS flow to which the third data frame is mapped is different from a DRB or QoS flow to which the second data frame is mapped. For example, one GOP is considered as one time unit, the first data frame is an I frame, and the second data frame is a P frame and/or a B frame. After detecting that a part of data packets in the I frame are lost, a UE proactively discards a part of or all data packets that are in the P frame and/or the B frame in the GOP and that are subsequently received from the upper layer.

For example, the I frame is mapped to a DRB 1, and the P frame is mapped to a DRB 2. After detecting that a part of data packets in the I frame or P frame are lost, the UE proactively discards a data packet that is subsequently received from the upper layer and that is mapped to the DRB 2, and performs receiving processing when a next data packet mapped to the DRB 1 arrives.

For example, the I frame is mapped to a QoS flow 1, and the P frame is mapped to a QoS flow 2. After detecting that a part of data packets in the I frame or P frame are lost, the UE proactively discards a data packet that is subsequently received from the upper layer and that is mapped to the QoS flow 2, and performs receiving processing when a next data packet mapped to the QoS flow 1 arrives.

When the PDCP entity of the first device determines that the first data frame is lost, the following implementations in which the first device discards the first data packet received from the upper layer are included.

In a possible implementation, the PDCP entity of the first device discards the first data packet received from the upper layer.

For example, the first data packet may be a PDCP SDU.

In another possible implementation, an SDAP entity of the first device discards the first data packet received from the upper layer.

For example, the first data packet may be an SDAP SDU.

In still another possible implementation, an SDAP entity of the first device receives first indication information from the PDCP entity of the first device, where the first indication information notifies that the first data frame is lost or notifies to perform proactive frame discarding; and the SDAP entity of the first device discards, based on the first indication information, the first data packet received from the upper layer.

Optionally, the first device sends second indication information to the second device, where the second indication information indicates that the first data frame is lost, and the second indication information includes at least one of the following: DRB information or QoS flow information corresponding to the first data frame, and PDCP COUNT or a PDCP SN. The PDCP COUNT or the PDCP SN indicates to update a status variable of a receive window of the second device.

According to the solution provided in this application, after identifying a first data frame transmission failure, the first device triggers proactive discarding of a data frame associated with the first data frame, namely, the data packet in the second data frame, to avoid a waste of air interface resources and transmission resources caused by continuous transmission, reduce execution of unnecessary decoding operations, and reduce power consumption of the device while improving resource utilization.

FIG. 4 is a schematic flowchart of a second communication method 400 according to an embodiment of this application. As shown in FIG. 4, specific implementations include the following steps.

S410: A first device determines that a first data frame is lost.

In a possible implementation, when a reordering timer of a PDCP entity of the first device expires, the PDCP entity of the first device determines that the first data frame is lost.

In another possible implementation, an application layer of the first device determines that the first data frame is lost.

It should be noted that, before the first device determines that the first data frame is lost, if the first device is a terminal device and a second device is a network device, the first device sends capability reporting information to the second device, where the capability reporting information indicates that the first device supports proactive frame discarding; and the first device receives configuration information from the second device, where the configuration information is for configuring a proactive frame discarding function.

S420: The first device sends indication information to the second device.

Correspondingly, the second device receives the indication information from the first device.

The indication information indicates to discard a first data packet received from an upper layer. The first data packet is a part of or all data packets in a second data frame, the second data frame is located after the first data frame, and the second data frame is associated with the first data frame. It should be noted that the second data frame being associated with the first data frame includes: all data packets in the first data frame and the second data frame are transmitted in a same time unit; or all data packets in the first data frame and the second data frame are data packets before arrival of a data packet in a third data frame, where a DRB or QoS flow to which the third data frame is mapped is different from a DRB or QoS flow to which the second data frame is mapped. For example, first indication information includes at least one of the following: first data radio bearer DRB information or first QoS flow information corresponding to the first data frame, duration information of the second data frame, a quantity of second data frames, second DRB information or second QoS flow information corresponding to the second data frame, and PDCP COUNT or a PDCP SN. The PDCP COUNT or the PDCP SN indicates an RX_REORD value before update.

In a possible implementation, the application layer of the first device sends the indication information to an access stratum of the first device; and the access stratum of the first device sends the indication information to the second device.

In another possible implementation, when the first device is of a CU-DU split architecture, a CU of the first device sends the first indication information to a DU of the first device; and the DU of the first device sends the first indication information to the second device.

S430: The second device discards, based on the indication information, the first data packet received from the upper layer.

In a possible implementation, a PDCP entity of the second device discards, based on the indication information, the first data packet received from the upper layer.

In another possible implementation, an SDAP entity of the second device discards, based on the indication information, the first data packet received from the upper layer.

According to the solution provided in this application, after identifying a first data frame transmission failure, the first device indicates the second device to discard a data frame associated with the first data frame, namely, the part of or all the data packets in the second data frame, to avoid a waste of air interface resources and transmission resources caused by continuous transmission, reduce execution of unnecessary decoding operations, and reduce power consumption of the device while improving resource utilization.

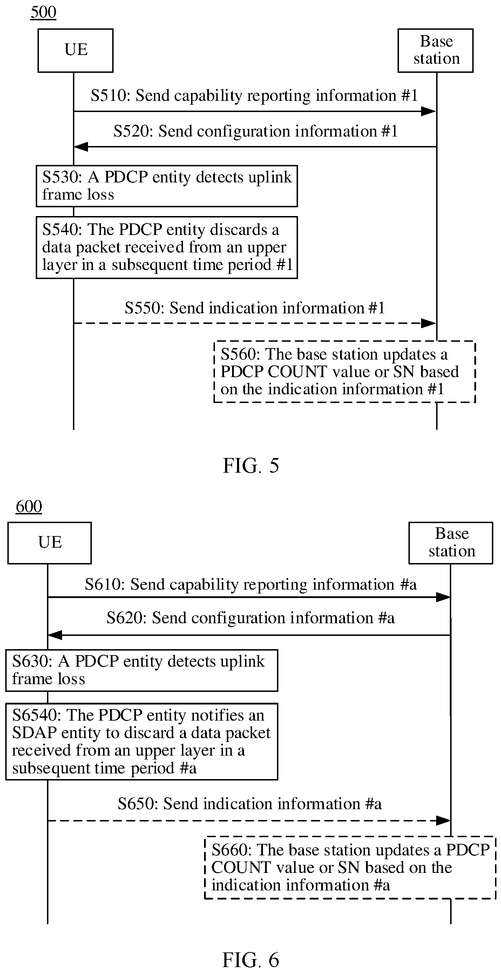

FIG. 5 is a schematic flowchart of a third communication method 500 according to an embodiment of this application. In this implementation, a PDCP entity of a UE detects an uplink frame transmission failure, and the PDCP entity triggers uplink proactive frame discarding. As shown in FIG. 5, specific implementations include the following steps.

S510: The UE sends capability reporting information #1 to a base station.

Correspondingly, the base station receives the capability reporting information #1 from the UE.

The capability reporting information #1 indicates that the UE supports a capability of performing uplink proactive frame discarding.

S520: The base station sends configuration information #1 to the UE.

Correspondingly, the UE receives the configuration information #1 from the base station.

The configuration information #1 is for configuring, for the UE, a function of performing uplink proactive frame discarding.

In a possible implementation, the base station configures a proactive frame discarding function for the UE based on the configuration information #1 carried in RRC signaling.

For example, the base station configures the proactive frame discarding function for at least one DRB of the UE. For example, the base station includes a proactiveFrameDiscard parameter/information element in configuration information #1 of a DRB #1 of the UE, where the parameter/information element indicates that the DRB #1 can perform a proactive frame discarding operation.

S530: The PDCP entity of the UE detects uplink frame loss.

In a possible implementation, when a discard timer discard Timer that corresponds to a PDCP SDU and that is maintained by the PDCP entity of the UE expires, and the data packet is not successfully transmitted, the UE determines that uplink frame loss occurs.

For example, the UE may determine, based on one of the following conditions, that the data packet is not successfully transmitted.
(1) The PDCP SDU or a PDCP PDU has not been delivered to an RLC entity.
(2) The PDCP PDU is delivered to the RLC entity, but a corresponding RLC SDU or a segment of the RLC SDU is not sent.
(3) After the RLC SDU corresponding to the PDCP PDU or the segment of the RLC SDU is transmitted most recently, an RLC NACK that is fed back by a network side and that is for at least a part of data content in the RLC SDU or the segment of the RLC SDU is received.
(4) After at least one MAC PDU corresponding to the data content in the PDCP PDU is transmitted most recently, a HARQ NACK that is fed back by the network side and that corresponds to the at least one MAC PDU is received.

S540: The PDCP entity of the UE discards a data packet received from an upper layer in a subsequent time period #1.

It should be noted that one PDCP entity corresponds to one DRB. This implementation is mainly applicable to a case in which data packets in different data frames of a service are delivered (or mapped) to a same DRB for processing/transmission.

Specifically, for example, the service includes an I frame and a P frame. The PDCP entity of the UE may discard, in one of the following manners, the data packet received in the subsequent time period #1.
(1) The PDCP entity discards a data packet that is before arrival of a data packet in a next I frame. In a possible implementation, the PDCP entity discards a data packet that is before arrival of a next data packet of a specified QFI. The specified QFI may be configured by the base station, or predefined in a protocol. For example, data packets in the I frame and the P frame may be allocated to different QoS flows, and different QFIs are used. The PDCP entity determines, based on the QFIs, whether to perform packet discarding, that is, proactively discard a received data packet in a QoS flow corresponding to the P frame.

For example, a data packet in the I frame is allocated to a QoS flow corresponding to a QFI 1, a data packet in the P frame is allocated to a QoS flow corresponding to a QFI 2, and the PDCP entity may proactively discard a data packet subsequently received from the QoS flow corresponding to the P frame, until a next data packet corresponding to the QFI 1 is delivered to the PDCP entity.

In another possible implementation, when delivering data packets to the PDCP entity of the UE, the upper layer (for example, an APP layer/a NAS stratum/an SDAP layer) carries indication information #2, to indicate the PDCP entity to discard a data packet that is before arrival of a next data packet associated with the specific indication information #2. The specific indication information #2 may be configured by the base station, or predefined in a protocol. For example, the indication information #2 indicates whether the data packet is a data packet in the I frame, and the PDCP entity determines, based on the indication information #2 carried in the data packet, whether to perform packet discarding, that is, proactively discard a data packet in a non-I frame. For example, if the indication information #2 indicates that the data packet is not a data packet in the I frame, the PDCP entity performs proactive packet discarding; or if the indication information #2 indicates that the data packet is a data packet in the I frame, the PDCP entity does not perform packet discarding. In other words, the PDCP entity proactively discards a data packet that is in the non-I frame and that is subsequently delivered, until a data packet in a next I frame is delivered to the PDCP entity.

In still another possible implementation, the PDCP entity discards a data packet that is before arrival of a next data frame whose data amount is greater than or equal to a specified data amount threshold. The specified data amount threshold may be configured by the base station, or predefined in a protocol. For example, the PDCP entity determines, based on a data amount of a data frame delivered by the upper layer, whether the data frame is the I frame, to determine whether to perform packet discarding, that is, proactively discard a data packet in a non-I frame.

Specifically, when a data amount of data packets belonging to a same frame is greater than or equal to a threshold, the frame may be determined as the I frame; or when a data amount of data packets belonging to a same frame is less than a threshold, the frame is determined as the non-I frame. For example, the threshold is represented by a. If a data amount b of data packets in a first frame that are received by the PDCP entity is greater than a, it indicates that the first frame is the I frame, and the PDCP entity does not perform packet discarding. If a data amount c of data packets in a second frame that are received by the PDCP entity is less than a, it indicates that the second frame is the non-I frame, and the PDCP entity performs packet discarding. In other words, the PDCP entity proactively discards a data packet that is in the non-I frame and that is subsequently delivered, until a data packet in a next I frame is delivered to the PDCP entity.

(2) The PDCP entity discards data packets in subsequent dependent frames (for example, a P frame and/or a B frame) in a current GOP.

In a possible implementation, the base station may configure GOP-related information for the UE, for example, duration information and frame rate information of the GOP. After determining a location of a frame that is in the GOP and in which uplink frame loss occurs, the PDCP entity of the UE may further determine to proactively discard data packets received from the upper layer in specific subsequent duration.

For example, the UE may determine, based on a mapping relationship between the I frame and the QFI or a mapping relationship between the P frame and the QFI, which frame in the GOP is the I frame, and then determine, based on the frame rate information, which frame in the GOP each arrived frame is.

For another example, the UE may determine, based on information indicated by the upper layer, which frame is the I frame in the GOP, and then determine, based on the frame rate information, which frame in the GOP each arrived frame is.

For another example, the UE may determine the I frame in the GOP based on a data amount of a video frame, and then determine which frame in the GOP a subsequently arrived frame is.

For example, it is assumed that the GOP includes six video frames, and a frame rate is 60 fps, that is, one video frame arrives at an interval of 16.67 ms. If the UE determines that a data frame in which uplink frame loss occurs is the 1^{st} frame in the GOP, the UE may discard data packets that subsequently arrive in 5*16.67 ms.

In another possible implementation, the base station may configure a mapping relationship between information about a location of a data frame that is in the GOP and in which uplink frame loss occurs and duration for proactive frame discarding. For details, refer to Table 1. After determining the location of the data frame that is in the GOP and in which the uplink frame loss occurs, the PDCP entity of the UE may further determine to proactively discard data packets received from the upper layer in specific subsequent duration.

Optionally, after determining the duration (for example, 10 ms) for proactive frame discarding, the PDCP entity of the UE may start a timer, for example, a frameDiscardTimer. Timing duration of the timer is equal to the duration, namely, 10 ms for proactive frame discarding that is determined by the UE. In this case, during running of the timer, the PDCP entity of the UE may discard a data packet delivered from the upper layer, and no further processing is required until the timer expires.

**Table 1**

| Frame that is in a GOP and in which uplink frame loss occurs | Duration for proactive frame discarding |
|---|---|
| 1 | X ms |
| 2 | Y ms |
| ... | ... |

For example, duration of a GOP #1 is 23 ms, and the GOP #1 includes 10 frames. The 1^{st} frame is an I frame, and transmission duration is 5 ms. The 2^{nd} frame to the 10^{th} frame are all P frames, and transmission duration of each frame is 2 ms. When it is determined that uplink frame loss occurs in the 4^{th} frame in the GOP, the PDCP entity may determine that duration for subsequent proactive frame discarding is 12 ms, that is, the PDCP entity of the UE may proactively discard data packets delivered from the upper layer in the next 12 ms, and no further processing is required.

It should be noted that Table 1 is merely an example for description, and should not constitute any limitation on the technical solutions of this application.

S550: Optionally, the UE sends indication information #1 to the base station.

Correspondingly, the base station receives the indication information #1 from the UE.

The indication information #1 indicates that uplink frame loss occurs, and the indication information #1 may be carried in at least one of RRC signaling, a PDCP control PDU, a MAC CE, and L1 signaling.

For example, the UE may include at least one of the following information in the MAC CE or the L1 signaling, that is, the indication information #1 includes at least one of the following information:
(1) DRB information: indicates DRB information corresponding to a data frame in which uplink proactive frame discarding occurs, for example, a DRB identity (DRB identity, DRB ID) or a logical channel identity (logical channel identity, LCH ID).
(2) QoS flow information: indicates QoS flow information corresponding to a data frame in which uplink proactive frame discarding occurs, for example, a QFI.
(3) PDCP COUNT or PDCP SN: indicates a PDCP COUNT value or SN that is updated in a receive window of a PDCP entity of the base station, for example, a TX_NEXT variable maintained by the PDCP entity of the UE. TX_NEXT indicates a COUNT value corresponding to a next PDCP SDU to be transmitted.

S560: Optionally, the base station updates the PDCP COUNT value or SN based on the indication information #1.

For example, after receiving the indication information #1, the PDCP entity of the base station stops a reordering timer, discards a data packet that has been received in a receive buffer of the PDCP entity, and updates a status variable of the receive window of the PDCP entity, for example, RX_DELIV, RX_NEXT, and RX_REORD. RX_DELIV represents a COUNT value corresponding to the 1^{st} PDCP SDU that has not been delivered to the upper layer, RX_NEXT represents a COUNT value corresponding to a next PDCP SDU that is expected to be received, and RX_REORD represents a next COUNT value of COUNT that triggers the reordering timer.

Specifically, if the indication information #1 carries a COUNT value, the base station updates at least one status variable of RX_DELIV, RX_NEXT, and RX_REORD to the COUNT value; or if the indication information #1 carries an SN, the base station determines a COUNT value based on the SN and a maintained hyper frame number (hyper frame number, HFN), and updates at least one status variable of RX_DELIV, RX_NEXT, and RX_REORD to the COUNT value.

It should be noted that when the base station is of a CU-DU split architecture, after receiving the MAC CE or L1 indication information #1 sent by the UE, a gNB-DU in step S550 sends the indication information #1 to a gNB-CU. For example, the gNB-DU indicates, to the gNB-CU via a DL DATA DELIVERY STATUS or an ASSISTANCE INFORMATION DATA message, the DRB information, the PDCP COUNT, or the PDCP SN carried in the indication information #1. Further, the gNB-CU performs step S560 after receiving the indication of the gNB-DU.

According to the method disclosed in this application, when detecting an uplink reference frame transmission failure, the PDCP entity of the UE may proactively discard a data packet in a subsequent dependent frame. This ensures user experience and avoids a waste of transmission resources and UE power consumption. In addition, the PDCP entity of the UE notifies a PDCP entity of the base station side to perform proactive packet discarding and window updating, to avoid a case in which the base station side transmits, to the UPF, a data packet that cannot be decoded at an application layer, and avoid an unnecessary reordering delay caused by a problem that a data packet in the receive buffer of the PDCP entity of the base station may have garbled characters, a sequence error, or the like when the UE side performs data transmission with the base station again after completing proactive frame discarding.

FIG. 6 is a schematic flowchart of a fourth communication method 600 according to an embodiment of this application. A difference from the method in FIG. 5 lies in that the method in FIG. 5 is applicable to a case in which data packets in different data frames of a service are delivered to a same DRB for processing/transmission, and the PDCP entity of the UE performs uplink proactive frame discarding, while implementations in FIG. 6 are applicable to a case in which data packets in different data frames of a service are delivered to a same DRB or different DRBs for processing/transmission, and the PDCP entity of the UE detects an uplink frame transmission failure and notifies an SDAP entity to perform uplink proactive frame discarding. As shown in FIG. 6, specific implementations include the following steps.

S610: The UE sends capability reporting information #a to a base station.

Correspondingly, the base station receives the capability reporting information #a from the UE. The capability reporting information #a indicates that the UE supports a capability of performing uplink proactive frame discarding.

S620: The base station sends configuration information #a to the UE.

Correspondingly, the UE receives the configuration information #a from the base station.

The configuration information #a is for configuring a proactive frame discarding function for the UE.

S630: The PDCP entity of the UE detects uplink frame loss.

For a specific implementation in which the UE determines that a data packet is not completely transmitted or is not successfully transmitted, refer to one of the conditions provided in step S430. Details are not described herein again.

It should be noted that, for specific implementations of steps S610 to S630, refer to the implementations of steps S510 to S530 in the method 500. For brevity, details are not described herein again.

S640: The PDCP entity of the UE notifies the SDAP entity to discard a data packet received from an upper layer in a subsequent time period #a.

It should be noted that one SDAP entity may correspond to a plurality of DRBs. In this implementation, that data packets in an I frame and a P frame are respectively delivered (or mapped) to different DRBs is used as an example to describe how the SDAP entity performs a packet discarding operation.

For example, a data packet in the I frame is allocated to a QoS flow corresponding to a QFI 1, a data packet in the P frame is allocated to a QoS flow corresponding to a QFI 2, and the data packets are further mapped to a DRB 1 and a DRB 2 respectively. In this case, the SDAP entity discards a data packet that is received from the upper layer in the subsequent time period #a and that is to be mapped to the DRB 1 or the DRB 2.

Specifically, the UE may discard, in one of the following manners, the data packet received in the subsequent time period #a.
(1) The SDAP entity of the UE proactively discards a data packet that is before arrival of a data packet in a next I frame.

In a possible implementation, the SDAP entity determines, based on a QFI, whether to perform packet discarding, and the SDAP entity discards a data packet that is before arrival of a next data packet of a specified QFI. The specified QFI may be configured by the base station, or predefined in a protocol. For example, the SDAP entity proactively discards a data packet DBR 2 subsequently received from the QoS flow corresponding to the P frame, until a next data packet corresponding to the QFI 1 is delivered to the SDAP entity.

In another possible implementation, when delivering data packets to the SDAP entity of the UE, the upper layer (for example, an APP layer/a NAS stratum/an SDAP layer) carries indication information #b, and the SDAP entity discards a data packet that is before arrival of a next data packet associated with the specific indication information #b. The specific indication information may be configured by the base station, or predefined in a protocol. For example, the indication information #b indicates whether the data packet is a data packet in the I frame, and the SDAP entity determines, based on the indication information #b carried in the data packet, whether to perform packet discarding, that is, proactively discard a data packet in a non-I frame.

In still another possible implementation, the SDAP entity discards a data packet that is before arrival of a next data frame whose data amount is greater than or equal to a specified data amount threshold. The specified data amount threshold may be configured by the base station, or predefined in a protocol. For example, the SDAP entity determines, based on a data amount of a data frame delivered by the upper layer, whether the data frame is the I frame, to determine whether to perform packet discarding, that is, proactively discard a data packet in a non-I frame.

(2) The SDAP entity of the UE discards data packets in subsequent dependent frames (for example, a P frame and/or a B frame) in a current GOP.

In a possible implementation, the base station may configure GOP-related information for the UE, for example, duration information and frame rate information of the GOP. After determining a location of a frame that is in the GOP and in which uplink frame loss occurs, the SDAP entity of the UE may further determine to proactively discard data packets received from the upper layer in specific subsequent duration.

In another possible implementation, the base station may configure a mapping relationship between information about a location of a frame that is in the GOP and in which uplink frame loss occurs and duration for proactive frame discarding. For details, refer to Table 1. After determining a location of a video frame that is in the GOP and in which the uplink frame loss occurs, the SDAP entity of the UE may further determine to proactively discard data packets received from the upper layer in specific subsequent duration.

S650: Optionally, the UE sends indication information #a to the base station.

Correspondingly, the base station receives the indication information #a from the UE.

S660: Optionally, the base station updates a PDCP COUNT value or SN based on the indication information #a.

When the base station is of a CU-DU split architecture, information exchange between a DU and a CU in step S660 is similar to that in step S560 in the method 500.

It should be noted that, for specific implementations of steps S650 and S660, refer to the implementations of steps S550 and S560 in the method 500. Meanings of the indication information #a and the indication information #b are respectively similar to meanings of the indication information #1 and the indication information #2 in the method 500. For brevity, details are not described herein again.

According to the method disclosed in this application, when detecting an uplink reference frame transmission failure, the PDCP entity of the UE may indicate the SDAP entity to proactively discard a data packet in a subsequent dependent frame. This ensures user experience and avoids a waste of transmission resources and UE power consumption. In addition, the PDCP entity of the UE may notify a PDCP entity of the base station side to perform proactive packet discarding and window updating, to avoid a case in which the base station side transmits, to the UPF, a data packet that cannot be decoded, and avoid an unnecessary reordering delay caused by a data packet with garbled characters or a sequence error in a receive buffer of the PDCP entity of the base station side when the UE side performs data transmission with the base station again after completing proactive frame discarding.

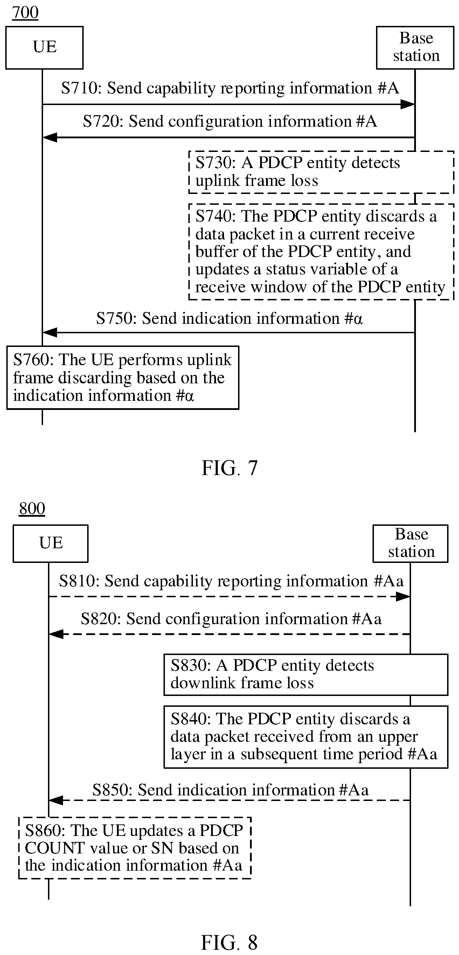

FIG. 7 is a schematic flowchart of a fifth communication method 700 according to an embodiment of this application. A difference from the methods in FIG. 5 and FIG. 6 lies in that in the methods in FIG. 5 and FIG. 6, the UE detects uplink frame loss, while in implementations in FIG. 7, the PDCP entity of the base station detects an uplink frame transmission failure, and indicates the UE (the PDCP entity or the SDAP entity) to perform uplink proactive frame discarding. As shown in FIG. 7, specific implementations include the following steps.

S710: The UE sends capability reporting information #A to the base station.

Correspondingly, the base station receives the capability reporting information #A from the UE. The capability reporting information #A indicates that the UE supports a capability of performing uplink proactive frame discarding.

S720: The base station sends configuration information #A to the UE.

Correspondingly, the UE receives the configuration information #A from the base station.

The configuration information #A is for configuring a proactive frame discarding function for the UE.

It should be noted that, for specific implementations of steps S710 and S720, refer to the implementations of steps S510 and S520 in the method 500. For brevity, details are not described herein again.

S730: Optionally, the PDCP entity of the base station detects uplink frame loss or uplink congestion.

In a possible implementation, when a reordering timer of the PDCP entity expires, the PDCP entity of the base station may determine that an uplink frame loss event occurs.

S740: Optionally, the PDCP entity of the base station discards a data packet that has been received in a current receive buffer of the PDCP entity, and updates a status variable of a receive window of the PDCP entity.

For example, the PDCP entity updates status variables RX_DELIV and/or RX_REORD to RX_NEXT. RX_DELIV, RX_REORD, and RX_NEXT have been described in step S560 in the method 500, and details are not described herein again.

S750: The base station sends indication information #α to the UE.

Correspondingly, the UE receives the indication information #α from the base station.

The indication information #α indicates that uplink frame loss occurs or indicates the UE to perform an uplink proactive frame discarding operation, and the indication information #α may be carried via at least one of RRC signaling, a PDCP control PDU, a MAC CE, and L1 signaling. For example, the base station may include at least one of the following information in the MAC CE or the L1 signaling, that is, the indication information #α includes at least one of the following information:
(1) First DRB information: indicates DRB information corresponding to a data frame in which uplink proactive frame discarding occurs, for example, a DRB identity (DRB identity, DRB ID) or a logical channel identity (logical channel identity, LCH ID).
(2) First QoS flow information: indicates QoS flow information corresponding to a data frame in which uplink frame loss occurs, for example, a QFI.
(3) Duration information: indicates duration for uplink proactive frame discarding. The duration information may be a duration value in a unit of ms, a slot (slot), or a frame periodicity.
(4) Frame quantity: indicates a quantity of subsequent dependent frames to be discarded.
(5) PDCP COUNT or PDCP SN: indicates a PDCP COUNT value or SN that is updated in a receive window of a PDCP entity of the UE, for example, carries an RX_DELIV value and/or an RX_REORD value of the PDCP entity of the base station before update.
(6) Second DRB information: indicates DRB information associated with a data packet that needs to be proactively discarded, for example, a DRB identity (DRB identity, DRB ID) or a logical channel identity (logical channel identity, LCH ID).
(7) Second QoS flow information: indicates QoS flow information corresponding to a data packet that needs to be proactively discarded, for example, a QFI.

S760: The UE performs uplink frame discarding based on the indication information #α.

In a possible implementation, the UE delivers the indication information #α to the PDCP entity, and the PDCP entity performs an uplink frame discarding operation based on the indication information #α, to discard a data packet received from an upper layer in a subsequent time period #α. This implementation is mainly applicable to a case in which data packets in different data frames of a service are delivered (or mapped) to a same DRB for processing/transmission.

Specifically, for example, the service includes an I frame and a P frame. The PDCP entity of the UE may discard, in one of the following manners, the data packet received in the subsequent time period #α.
(1) The PDCP entity discards a data packet that is before arrival of a next I frame.
(2) The PDCP entity discards a data packet in a subsequent dependent frame in a current GOP.
(3) The PDCP entity starts a timer, for example, a frameDiscardTimer, based on the duration information carried in the indication information #α. During running of the timer, the PDCP entity of the UE may discard a data packet delivered from the upper layer, and no further processing is required until the timer expires.
(4) The PDCP entity discards data packets in subsequent N frames based on the frame quantity, for example, N, carried in the indication information #α.

Specific implementations of the manners (1) and (2) are similar to those of step S540 in the method 500. For example, the PDCP entity of the UE discards a received data packet (for example, a data packet mapped to a specified QFI), where the specified QFI may be configured by the base station or predefined in a protocol. For brevity, details are not described herein again.

It should be noted that, in this implementation, the discarding the received data packet by the PDCP entity of the UE may also be indicated based on the indication information #α in step S750, for example, the timer or frame quantity carried in the indication information #α in the manners (3) and (4).

In another possible implementation, the UE delivers the indication information #α to the SDAP entity, and the SDAP entity performs an uplink frame discarding operation based on the indication information #α, to discard a data packet received from an upper layer in a subsequent time period #α. This implementation is mainly applicable to a case in which data packets in different data frames of a service are delivered (or mapped) to different DRBs for processing/transmission.

Specifically, for example, the service includes an I frame and a P frame. The SDAP entity of the UE may discard, in one of the following manners, the data packet received in the subsequent time period #α.
(1) For a data packet that is delivered by the upper layer and that is mapped to a DRB 1 or a DRB 2, the SDAP entity proactively discards a data packet that is before arrival of a data packet in a next I frame.
(2) The SDAP entity discards a data packet in a subsequent dependent frame in a current GOP.
(3) The SDAP entity starts a timer, for example, a frameDiscardTimer, based on the duration information carried in the indication information #α. During running of the timer, the SDAP entity may proactively discard a data packet that is received from the upper layer and that is to be mapped to the DRB 1 or the DRB 2.
(4) The SDAP entity discards, based on the frame quantity, for example, N, carried in the indication information #α, data packets in subsequent N frames that are received from the upper layer and that are to be mapped to the DRB 1 or the DRB 2.

Specific implementations of the manners (1) and (2) are similar to those of step S640 in the method 600. For example, the SDAP entity of the UE discards a received data packet (for example, a data packet mapped to a specified DRB), where the specified DRB may be configured by the base station or predefined in a protocol. For brevity, details are not described herein again.

It should be noted that, in this implementation, the discarding the received data packet by the SDAP entity of the UE may also be indicated based on the indication information #α in step S750, for example, the timer or frame quantity carried in the indication information #α in the manners (3) and (4).

It should be noted that when the base station is of a CU-DU split architecture, in step S750, when the base station sends the indication information #α to the UE via the MAC CE or the L1 signaling, a gNB-DU needs to first send the indication information #α to a gNB-DU, and then the gNB-DU sends the indication information #α to the UE via the MAC CE or the L1 signaling. For example, the gNB-CU may include the indication information #α via a DL USER DATA message.

According to the method disclosed in this application, when detecting an uplink reference frame transmission failure, the PDCP entity of the base station indicates the UE (the PDCP entity or the SDAP entity), based on the indication information, to proactively discard a data packet in a subsequent dependent frame. This ensures user experience and avoids a waste of transmission resources and UE power consumption.

FIG. 5 to FIG. 7 show the solutions in which the PDCP entity or SDAP entity of the UE performs uplink proactive frame discarding when the PDCP entity of the UE or base station detects an uplink frame transmission failure. FIG. 8 to FIG. 10 in the following show solutions in which the PDCP entity or SDAP entity of the base station performs downlink proactive frame discarding when the PDCP entity of the UE or base station detects a downlink frame transmission failure.

FIG. 8 is a schematic flowchart of a sixth communication method 800 according to an embodiment of this application. In this implementation, a PDCP entity of a base station detects a downlink frame transmission failure, and the PDCP entity triggers downlink proactive frame discarding. As shown in FIG. 8, specific implementations include the following steps.

S810: Optionally, a UE sends capability reporting information #Aa to the base station.

Correspondingly, the base station receives the capability reporting information #Aa from the UE. The capability reporting information #Aa indicates that the UE supports a capability of performing uplink proactive frame discarding.

S820: Optionally, the base station sends configuration information #Aa to the UE.

Correspondingly, the UE receives the configuration information #Aa from the base station.

The configuration information #Aa is for configuring a proactive frame discarding function for the UE.

It should be noted that, for specific implementations of steps S810 and S820, refer to the implementations of steps S510 and S520 in the method 500. For brevity, details are not described herein again.

In addition, after triggering downlink proactive frame discarding, if the PDCP entity of the base station does not indicate, based on indication information #Aa in step S850, the UE to perform step S860, step S810 and step S820 in this implementation do not need to be performed.

S830: The PDCP entity of the base station detects downlink frame loss.

In a possible implementation, when a discard Timer that corresponds to a PDCP SDU and that is maintained by the PDCP entity of the base station expires, and a data packet is not completely transmitted or is not successfully transmitted, the base station determines that downlink frame loss occurs.

A specific implementation in which the base station determines that the data packet is not completely transmitted or is not successfully transmitted is similar to that in step S530 in the method 500. For brevity, details are not described herein again.

S840: The PDCP entity of the base station discards a data packet received from an upper layer in a subsequent time period #Aa.

It should be noted that one PDCP entity corresponds to one DRB. This implementation is mainly applicable to a case in which data packets in different data frames of a service are delivered (or mapped) to a same DRB for processing/transmission.

Specifically, the PDCP entity of the base station may discard, in one of the following manners, the data packet received in the subsequent time period #Aa.
(1) The PDCP entity discards a data packet that is before arrival of a data packet in a next I frame. In a possible implementation, the PDCP entity discards a data packet that is before arrival of a next data packet of a specified QFI. The specified QFI may be configured by the base station, or predefined in a protocol. For example, data packets in the I frame and the P frame may be allocated to different QoS flows, and different QFIs are used. The PDCP entity determines, based on the QFIs, whether to perform packet discarding, that is, proactively discard a received data packet in a QoS flow corresponding to the P frame.

In another possible implementation, when delivering a data packet to the PDCP entity of the base station, the upper layer (for example, an APP layer/a NAS stratum/an SDAP layer) indicates the PDCP entity to discard a data packet that is before arrival of a next data packet associated with specific indication information. The specific indication information may be configured by the base station, or predefined in a protocol. For example, the indication information indicates whether the data packet is a data packet in the I frame, and the PDCP entity determines, based on the indication information #2 carried in the data packet, whether to perform packet discarding, that is, proactively discard a data packet in a non-I frame.

In still another possible implementation, the PDCP entity discards a data packet that is before arrival of a next data frame whose data amount is greater than or equal to a specified data amount threshold. The specified data amount threshold may be configured by the base station, or predefined in a protocol. For example, the PDCP entity determines, based on a data amount of a data frame delivered by the upper layer, whether the data frame is the I frame, to determine whether to perform packet discarding, that is, proactively discard a data packet in a non-I frame.

(2) The PDCP entity discards data packets in subsequent frames (for example, a P frame and/or a B frame) in a current GOP.

In a possible implementation, based on GOP-related information, for example, duration information and frame rate information of the GOP, after determining a location of a data frame that is in the GOP and in which downlink frame loss occurs, the PDCP entity of the base station may further determine to proactively discard data packets proactively received from the upper layer in specific subsequent duration.

In another possible implementation, based on a mapping relationship between information about a location of a data frame that is in the GOP and in which downlink frame loss occurs and duration for proactive frame discarding, specifically referring to Table 1, the base station may determine the location of the data frame that is in the GOP and in which downlink frame loss occurs, to further determine to proactively discard data packets received from the upper layer in specific subsequent duration.

Optionally, after determining the duration (for example, 10 ms) for proactive frame discarding, the PDCP entity of the base station may start a timer, for example, a frameDiscardTimer. Timing duration of the timer is equal to the duration, namely, 10 ms for proactive frame discarding that is determined by the base station. In this case, during running of the timer, the PDCP entity of the base station may discard a data packet delivered from the upper layer, and no further processing is required until the timer expires.

S850: Optionally, the base station sends indication information #Aa to the UE.

Correspondingly, the UE receives the indication information #Aa from the base station.

The indication information #Aa indicates that downlink frame loss occurs, and a manner for carrying the indication information #Aa and content carried in the indication information #Aa are similar to those of the indication information #1 in step S550 in the method 500. For brevity, details are not described herein again.

S860: Optionally, the UE updates a PDCP COUNT value or SN based on the indication information #Aa.

For example, after receiving the indication information #Aa, a PDCP entity of the UE stops a reordering timer, discards a data packet that has been received in a receive buffer of the PDCP entity, and updates a status variable of the receive window of the PDCP entity, for example, RX_DELIV, RX_NEXT, and RX_REORD. RX_DELIV, RX_REORD, and RX_NEXT have been described in step S560 in the method 500, and details are not described herein again.

Specifically, if the indication information #Aa carries a COUNT value, the UE updates at least one status variable of RX_DELIV, RX_NEXT, and RX_REORD to the COUNT value; or if the indication information #Aa carries an SN, the UE determines a COUNT value based on the SN and a maintained SFN, and updates at least one status variable of RX_DELIV, RX_NEXT, and RX_REORD to the COUNT value.

It should be noted that, when the base station is of a CU-DU split architecture, information exchange between a DU and a CU in step S850 is similar to that in step S750 in the method 700. According to the method disclosed in this application, when detecting a downlink reference frame transmission failure, the PDCP entity of the base station may proactively discard a data packet in a subsequent dependent frame. In addition, the PDCP entity of the base station may notify the PDCP entity of the UE to perform proactive packet discarding and window updating. This ensures user experience and avoids a waste of transmission resources and UE power consumption.

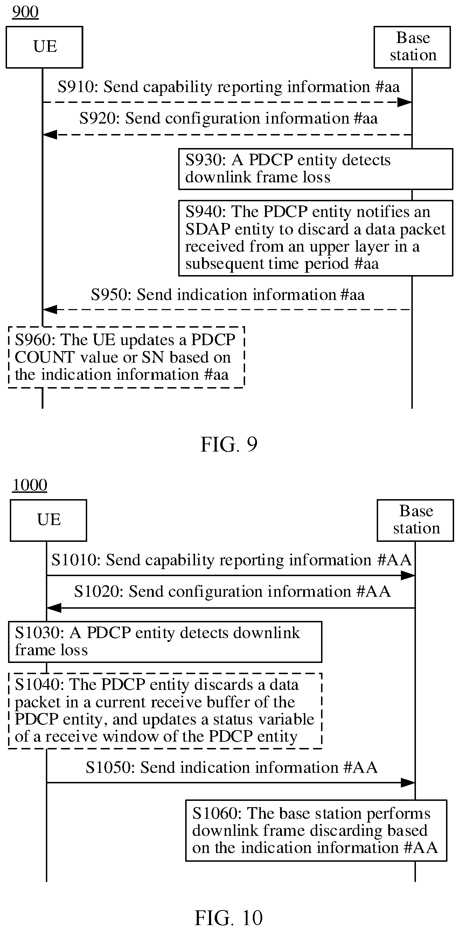

FIG. 9 is a schematic flowchart of a seventh communication method 900 according to an embodiment of this application. A difference from the method in FIG. 8 lies in that the method in FIG. 8 is applicable to a case in which data packets in different data frames of a service are delivered to a same DRB for processing/transmission, and the PDCP entity of the base station performs downlink proactive frame discarding, while implementations in FIG. 9 are applicable to a case in which data packets in different data frames of a service are delivered to different DRBs for processing/transmission, and the PDCP entity of the base station detects a downlink frame transmission failure and notifies an SDAP entity to perform downlink proactive frame discarding. As shown in FIG. 9, specific implementations include the following steps.

S910: Optionally, a UE sends capability reporting information #aa to the base station.

Correspondingly, the base station receives the capability reporting information #aa from the UE. The capability reporting information #aa indicates that the UE supports a capability of performing uplink proactive frame discarding.

S920: Optionally, the base station sends configuration information #aa to the UE.

Correspondingly, the UE receives the configuration information #aa from the base station.

The configuration information #aa is for configuring a proactive frame discarding function for the UE.

S930: The PDCP entity of the base station detects downlink frame loss.

For a specific implementation in which the base station determines that a data packet is not completely transmitted or is not successfully transmitted, refer to one of the conditions provided in step S830. Details are not described herein again.

It should be noted that, for specific implementations of steps S910 to S930, refer to the implementations of steps S810 to S830 in the method 800. For brevity, details are not described herein again.

S940: The PDCP entity of the base station notifies the SDAP entity to discard a data packet received from an upper layer in a subsequent time period #aa.

It should be noted that one SDAP entity may correspond to a plurality of DRBs. In this implementation, that data packets in an I frame and a P frame are respectively delivered (or mapped) to different DRBs or QoS flows (for example, a DRB 1 and a DRB 2, or a QoS flow 1 and a QoS flow 2) is used as an example, to describe how the SDAP entity discards a data packet that is received from the upper layer in the subsequent time period #aa and that is to be mapped to the DRB 1 or the DRB 2.

Specifically, the base station may discard, in one of the following manners, the data packet received in the subsequent time period #aa.
(1) For a data packet that is delivered by the upper layer and that is mapped to a DRB 1 or a DRB 2, the SDAP entity of the base station proactively discards a data packet that is before arrival of a data packet in a next I frame.

In a possible implementation, the SDAP entity determines, based on the DRB, whether to perform packet discarding, and the SDAP entity discards a data packet that is before arrival of a next data packet of a specified DRB. The specified DRB may be configured by the base station, or predefined in a protocol. For example, the SDAP entity proactively discards a data packet DBR 2 subsequently received from the QoS flow corresponding to the P frame, until a next data packet corresponding to the DBR 1 is delivered to the SDAP entity.

In another possible implementation, when delivering data packets to the SDAP entity of the base station, the upper layer (for example, an APP layer/a NAS stratum/an SDAP layer) indicates the SDAP entity to discard a data packet that is before arrival of a next data packet associated with specific indication information. The specific indication information may be configured by the base station, or predefined in a protocol. For example, the indication information indicates whether the data packet is a data packet in the I frame, and the SDAP entity determines, based on the indication information carried in the data packet, whether to perform packet discarding, that is, proactively discard a data packet in a non-I frame.

In still another possible implementation, the SDAP entity discards a data packet that is before arrival of a next data frame whose data amount is greater than or equal to a specified data amount threshold. The specified data amount threshold may be configured by the base station, or predefined in a protocol. For example, the SDAP entity determines, based on a data amount of a data frame delivered by the upper layer, whether the data frame is the I frame, to determine whether to perform packet discarding, that is, proactively discard a data packet in a non-I frame.

(2) The SDAP entity discards data packets in subsequent dependent frames (for example, a P frame and/or a B frame) in a current GOP.

In a possible implementation, the base station performs an operation based on configured GOP-related information, for example, duration information and frame rate information of the GOP. After determining a location of a frame that is in the GOP and in which downlink frame loss occurs, the SDAP entity of the base station may further determine to proactively discard data packets received from the upper layer in specific subsequent duration.

In another possible implementation, the base station performs an operation based on a configured mapping relationship between information about a location of a frame that is in the GOP and in which downlink frame loss occurs and duration for proactive frame discarding. For details, refer to Table 1. After determining a location of a video frame that is in the GOP and in which downlink frame loss occurs, the SDAP entity of the base station may further determine to proactively discard data packets received from the upper layer in specific subsequent duration.

S950: Optionally, the base station sends indication information #aa to the UE.

Correspondingly, the UE receives the indication information #aa from the base station.

The indication information #aa indicates that downlink frame loss occurs.

S960: Optionally, the UE updates a PDCP COUNT value or SN based on the indication information #aa.

For example, after receiving the indication information #1, a PDCP entity of the UE stops a reordering timer, discards a data packet that has been received in a receive buffer of the PDCP entity, and updates a status variable of the receive window of the PDCP entity.

It should be noted that, when the base station is of a CU-DU split architecture, information exchange between a DU and a CU in step S950 is similar to that in step S850 in the method 800. According to the method disclosed in this application, when detecting a downlink reference frame transmission failure, the PDCP entity of the base station may indicate the SDAP entity to proactively discard a data packet in a subsequent dependent frame. In addition, the PDCP entity of the base station may notify the PDCP entity of the UE to perform proactive packet discarding and window updating. This ensures user experience and avoids a waste of transmission resources and UE power consumption.

FIG. 10 is a schematic flowchart of an eighth communication method 1000 according to an embodiment of this application. A difference from the methods in FIG. 8 and FIG. 9 lies in that in the methods in FIG. 8 and FIG. 9, the base station detects downlink frame loss, while in implementations in FIG. 10, the PDCP entity of the UE detects a downlink frame transmission failure, and indicates the base station (the PDCP entity or the SDAP entity) to perform downlink proactive frame discarding. As shown in FIG. 10, specific implementations include the following steps.

S1010: The UE sends capability reporting information #AA to the base station.

Correspondingly, the base station receives the capability reporting information #AA from the UE. The capability reporting information #AA indicates that the UE supports a capability of performing uplink proactive frame discarding.

S1020: The base station sends configuration information #AA to the UE.

Correspondingly, the UE receives the configuration information #AA from the base station.

The configuration information #AA is for configuring a proactive frame discarding function for the UE.

It should be noted that, for specific implementations of steps S1010 and S1020, refer to the implementations of steps S510 and S520 in the method 500. For brevity, details are not described herein again.

S1030: The PDCP entity of the UE detects downlink frame loss.

In a possible implementation, when a reordering timer of the PDCP entity expires, the PDCP entity of the UE may determine that a downlink frame loss event occurs.

S1040: Optionally, the PDCP entity of the UE discards a data packet that has been received in a current receive buffer of the PDCP entity, and updates a status variable of a receive window of the PDCP entity.

For example, the PDCP entity updates status variables RX_DELIV and/or RX_REORD to RX_NEXT. RX_DELIV, RX_REORD, and RX_NEXT have been described in step S560 in the method 500, and details are not described herein again.

S1050: The UE sends indication information #AA to the base station.

Correspondingly, the base station receives the indication information #AA from the UE.

The indication information #AA indicates that downlink frame loss occurs.

It should be noted that, a manner for carrying the indication information #AA and content carried in the indication information #AA are similar to those of the indication information #α in step S750 in the method 700. For brevity, details are not described herein again.

S1060: The base station performs downlink frame discarding based on the indication information #AA.

In a possible implementation, the base station delivers the indication information #AA to the PDCP entity, and the PDCP entity performs a downlink frame discarding operation based on the indication information #AA, to discard a data packet received from an upper layer in a subsequent time period #AA. This implementation is mainly applicable to a case in which data packets in different data frames (including an I frame and a P frame) of a service are delivered (or mapped) to a same DRB for processing/transmission.

Specifically, for example, the service includes an I frame and a P frame. The PDCP entity of the base station may discard, in one of the following manners, the data packet received in the subsequent time period #AA.
(1) The PDCP entity discards a data packet that is before arrival of a next I frame.
(2) The PDCP entity discards a data packet in a subsequent dependent frame in a current GOP.
(3) The PDCP entity starts a timer, for example, a frameDiscardTimer, based on duration information carried in the indication information ##AA. During running of the timer, the PDCP entity of the base station may discard a data packet delivered from the upper layer, and no further processing is required until the timer expires.
(4) The PDCP entity discards data packets in subsequent N frames based on the frame quantity, for example, N, carried in the indication information ##AA.

Specific implementations of the manners (1) and (2) are similar to those of step S840 in the method 800. For example, the PDCP entity of the base station discards a received data packet (for example, a data packet mapped to a specified QFI), where the specified QFI may be configured by the base station or predefined in a protocol. For brevity, details are not described herein again.

It should be noted that, in this implementation, the discarding the received data packet by the PDCP entity of the base station may also be indicated based on the indication information ##AA in step S1050, for example, the timer or frame quantity carried in the indication information #AA in the manners (3) and (4).

In another possible implementation, the base station delivers the indication information #AA to the SDAP entity, and the SDAP entity performs a downlink frame discarding operation based on the indication information #AA, to discard a data packet received from an upper layer in a subsequent time period #AA. This implementation is mainly applicable to a case in which data packets in different data frames (including an I frame and a P frame) of a service are delivered (or mapped) to different DRBs for processing/transmission.

Specifically, for example, the service includes an I frame and a P frame. The SDAP entity of the base station may discard, in one of the following manners, the data packet received in the subsequent time period #AA.
(1) For a data packet that is delivered by the upper layer and that is mapped to a DRB 1 or a DRB 2, the SDAP entity proactively discards a data packet that is before arrival of a data packet in a next I frame.
(2) The SDAP entity discards a data packet in a subsequent dependent frame in a current GOP.
(3) The SDAP entity starts a timer, for example, a frameDiscardTimer, based on the duration information carried in the indication information #AA. During running of the timer, the SDAP entity may proactively discard a data packet that is received from the upper layer and that is to be mapped to the DRB 1 or the DRB 2.
(4) The SDAP entity discards, based on the frame quantity, for example, N, carried in the indication information #AA, data packets in subsequent N frames that are received from the upper layer and that are to be mapped to the DRB 1 or the DRB 2.

Specific implementations of the manners (1) and (2) are similar to those of step S940 in the method 900. For example, the SDAP entity of the base station discards a received data packet (for example, a data packet mapped to a specified DRB), where the specified DRB may be configured by the base station or predefined in a protocol. For brevity, details are not described herein again.

It should be noted that, in this implementation, the discarding the received data packet by the SDAP entity of the base station may also be indicated based on the indication information #AA in step S1050, for example, the timer or frame quantity carried in the indication information #AA in the manners (3) and (4).

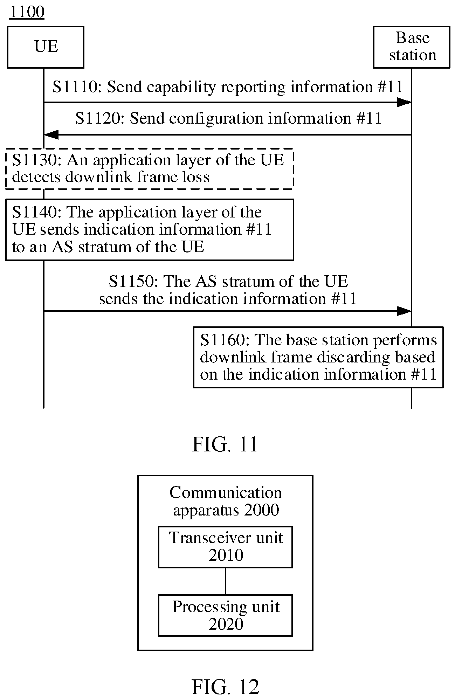

It should be noted that, when the base station is of a CU-DU split architecture, information exchange between a DU and a CU in step S1060 is similar to that in step S560 in the method 500. According to the method disclosed in this application, when detecting a downlink reference frame transmission failure, the PDCP entity of the UE may indicate the base station (the PDCP entity or the SDAP entity), based on the indication information, to proactively discard a data packet in a subsequent dependent frame. In addition, the PDCP entity of the base station may notify the PDCP entity of the UE to perform proactive packet discarding and window updating. This ensures user experience and avoids an unnecessary waste of transmission resources and UE power consumption. FIG. 11 is a schematic flowchart of a ninth communication method 1100 according to an embodiment of this application. A difference from the methods in FIG. 8 to FIG. 10 lies in that in the methods in FIG. 8 to FIG. 10, the base station or the UE detects a downlink frame transmission failure on an air interface side, and triggers the base station to perform a downlink proactive frame discarding operation, while in implementations in FIG. 11, an application APP layer of the UE detects a downlink frame transmission failure, and notifies, via air interface signaling, the base station (the PDCP entity or the SDAP entity) to perform downlink proactive frame discarding. As shown in FIG. 11, specific implementations include the following steps.

S1110: The UE sends capability reporting information #11 to the base station.

Correspondingly, the base station receives the capability reporting information #11 from the UE. The capability reporting information #11 indicates that the UE supports a capability of performing uplink proactive frame discarding.

S1120: The base station sends configuration information #11 to the UE.

Correspondingly, the UE receives the configuration information #11 from the base station.

The configuration information #11 is for configuring a proactive frame discarding function for the UE.

It should be noted that, for specific implementations of steps S1110 and S1120, refer to the implementations of steps S510 and S520 in the method 500. For brevity, details are not described herein again.

S1130: Optionally, the application layer of the UE detects downlink frame loss.

For example, when a data frame does not arrive at the application layer of the UE at expected arrival time, the application layer of the UE may determine that downlink frame loss occurs.

How the application layer of the UE detects downlink frame loss may be implemented internally. This is not specifically limited in this application.

S1140: The application layer of the UE sends indication information #11 to an access stratum (access stratum, AS) of the UE.

Correspondingly, the AS stratum of the UE receives the indication information #11 from the application layer of the UE.

The indication information #11 indicates that downlink frame loss occurs.

For example, the application layer of the UE may send the indication information #11 to an RRC layer or a MAC layer.

S1150: The UE sends the indication information #11 to the base station.

Correspondingly, the base station receives the indication information #11 from the UE.

The indication information #11 indicates that downlink frame loss occurs or indicates the base station to perform proactive frame discarding.

It should be noted that, a manner for carrying the indication information #11 and content carried in the indication information #11 are similar to those of the indication information #α in step S750 in the method 700. For brevity, details are not described herein again.

S1160: The base station performs downlink proactive frame discarding based on the indication information #11.

It should be noted that a specific implementation in which the base station performs downlink frame discarding is similar to that in step S1060 in the method 1000. For brevity, details are not described herein again.

It should be noted that, when the base station is of a CU-DU split architecture, information exchange between a DU and a CU in step S960 is similar to that in step S560 in the method 500. According to the method disclosed in this application, when detecting a downlink reference frame transmission failure, the application layer of the UE may indicate the base station (the PDCP entity or the SDAP entity), based on the indication information, to proactively discard a data packet in a subsequent dependent frame. This ensures user experience, avoids a waste of transmission resources, and avoids complexity caused by designing a complex packet discarding detection mechanism at the AS stratum.

It should be noted that the communication method provided above may be implemented separately, or may be implemented in combination. This is not specifically limited in this application. For example, the communication methods 300, 500, and 600 may be combined, so that the UE (the PDCP entity) detects that an uplink frame is lost, to trigger the UE (the PDCP entity or the SDAP entity) to proactively discard a subsequent dependent frame associated with the lost data frame. For another example, the communication methods 300, 800, and 900 may be combined, so that the base station (the PDCP entity) detects that a downlink frame is lost, to trigger the base station (the PDCP entity or the SDAP entity) to proactively discard a subsequent dependent frame associated with the lost data frame. For another example, the communication methods 400 and 700 may be combined, so that the base station (the PDCP entity) detects that an uplink frame is lost, and indicates the UE (the PDCP entity or the SDAP entity) to proactively discard a subsequent dependent frame associated with the lost data frame. For another example, the communication methods 400, 1000, and 1100 may be combined, so that the UE (the PDCP entity or the application layer) detects that a downlink frame is lost, and indicates the base station (the PDCP entity or the SDAP entity) to proactively discard a subsequent dependent frame associated with the lost data frame.

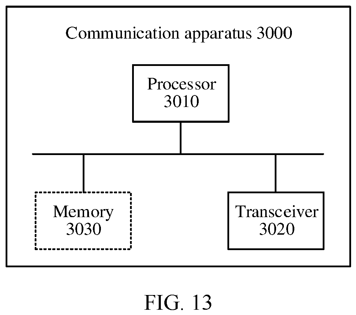

The foregoing describes in detail embodiments on a communication method side of this application with reference to FIG. 1 to FIG. 11. The following describes in detail embodiments on a communication apparatus side of this application with reference to FIG. 12 and FIG. 13. It should be understood that descriptions of the apparatus embodiments correspond to the descriptions of the method embodiments, and therefore for a part that is not described in detail, refer to the foregoing method embodiments.

FIG. 12 is a block diagram of a communication apparatus according to an embodiment of this application. As shown in FIG. 12, the apparatus 2000 includes a transceiver unit 2010 and a processing unit 2020. The transceiver unit 2010 may communicate with the outside, and the processing unit 1120 is configured to perform data processing. The transceiver unit 2010 may also be referred to as a communication interface or a transceiver module.

In a possible design, the apparatus 2000 may implement steps or procedures performed by the first device in the foregoing method embodiment 300. The processing unit 2020 is configured to perform processing-related operations of the first device in the foregoing method embodiments, and the transceiver unit 2010 is configured to perform sending and receiving-related operations of the first device in the foregoing method embodiments.

For example, the processing unit 2020 is configured to determine that a first data frame is lost, and discard a first data packet received from an upper layer, where the first data packet is a part of or all data packets in a second data frame, the second data frame is located after the first data frame, and the second data frame is associated with the first data frame.

In another possible design, the apparatus 2000 may implement steps or procedures performed by the first device in the foregoing method embodiment 400. The processing unit 2020 is configured to perform processing-related operations of the first device in the foregoing method embodiments, and the transceiver unit 2010 is configured to perform sending and receiving-related operations of the first device in the foregoing method embodiments.

For example, the processing unit 2020 is configured to determine that a first data frame is lost; and the transceiver unit 2010 is configured to send indication information to a second device, where the indication information indicates to discard a first data packet received from an upper layer, where the first data packet is a part of or all data packets in a second data frame, the second data frame is located after the first data frame, and the second data frame is associated with the first data frame.

In still another possible design, the apparatus 2000 may implement steps or procedures performed by the second device in the foregoing method embodiment 400. The transceiver unit 2010 is configured to perform sending and receiving-related operations of the second device in the foregoing method embodiments, and the processing unit 2020 is configured to perform processing-related operations of the second device in the foregoing method embodiments.

For example, the transceiver unit 2010 is configured to receive indication information from a first device, where the indication information indicates to discard a first data packet received from an upper layer, where the first data packet is a part of or all data packets in a second data frame, the second data frame is located after the first data frame, the second data frame is associated with the first data frame, and the first data frame is a lost data frame determined by the first device; and the processing unit 2020 is configured to discard, based on the indication information, the first data packet received from the upper layer.

It should be understood that the apparatus 2000 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 2000 may be specifically the transmit end in the foregoing embodiments, and may be configured to perform the procedures and/or steps corresponding to the transmit end in the foregoing method embodiments. Alternatively, the apparatus 2000 may be specifically the receive end in the foregoing embodiments, and may be configured to perform the procedures and/or steps corresponding to the receive end in the foregoing method embodiments. To avoid repetition, details are not described herein again.

The apparatus 2000 in each of the foregoing solutions has a function of implementing the corresponding steps performed by the transmit end in the foregoing method, or the apparatus 2000 in each of the foregoing solutions has a function of implementing the corresponding steps performed by the receive end in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitting machine, and a receiving unit in the transceiver unit may be replaced by a receiver machine), and another unit, for example, the processing unit, may be replaced by a processor, to separately perform sending and receiving operations and processing-related operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 12 may be the receive end or the transmit end in the foregoing embodiments, or may be a chip or a chip system, for example, a system on chip (system on chip, SoC). The transceiver unit may be an input/output circuit or a communication interface. The processing unit is a processor a microprocessor or an integrated circuit integrated on the chip. This is not limited herein.

FIG. 13 shows a communication apparatus 3000 according to an embodiment of this application. The apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the apparatus 3000 may further include a memory 3030. The memory 3030 communicates with the processor 3010 and the transceiver 3020 through an internal connection path. The memory 3030 is configured to store the instructions. The processor 3010 may execute the instructions stored in the memory 3030.

In a possible implementation, the apparatus 3000 is configured to implement the procedures and steps corresponding to the first device in the foregoing method embodiment 300.

In another possible implementation, the apparatus 3000 is configured to implement the procedures and steps corresponding to the first device in the foregoing method embodiment 400.

In still another possible implementation, the apparatus 3000 is configured to implement the procedures and steps corresponding to the second device in the foregoing method embodiment 400.

It should be understood that the apparatus 3000 may be specifically the first device or the second device in the foregoing embodiments, or may be a chip or a chip system in the first device or the second device. Correspondingly, the transceiver 3020 may be a transceiver circuit of the chip. This is not limited herein. Specifically, the apparatus 3000 may be configured to perform the steps and/or procedures corresponding to the transmit end or the receive end in the foregoing method embodiments.

Optionally, the memory 3030 may include a read-only memory and a random access memory, and provide instructions and data to the processor. A part of the memory may further include a nonvolatile random access memory. For example, the memory may further store information of a device type. The processor 3010 may be configured to execute the instructions stored in the memory. When the processor 3010 executes the instructions stored in the memory, the processor 3010 is configured to perform the steps and/or procedures of the method embodiment corresponding to the transmit end or the receive end.

In an implementation process, steps in the foregoing methods can be implemented by using a hardware integrated logic circuit in the processor, or by using instructions in a form of software. The steps in the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by a hardware integrated logic circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium, storing program code. When the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first device, that a first data frame is lost; and
discarding, by the first device, a first data packet received from an upper layer, wherein the first data packet is a part of or all data packets in a second data frame, the second data frame is located after the first data frame, and the second data frame is associated with the first data frame.

2. The method according to claim 1, wherein that the second data frame is associated with the first data frame comprises:
all data packets in the first data frame and the second data frame are transmitted in a same time unit; or
all data packets in the first data frame and the second data frame are data packets before arrival of a data packet in a third data frame, wherein a data radio bearer DRB or quality of service QoS flow to which the third data frame is mapped is different from a DRB or QoS flow to which the second data frame is mapped.

3. The method according to claim 1 or 2, wherein the method further comprises:
when the first device is a terminal device and a second device is a network device, sending, by the first device, capability reporting information to the second device, wherein the capability reporting information indicates that the first device supports proactive frame discarding; and
receiving, by the first device, configuration information from the second device, wherein the configuration information is for configuring a proactive frame discarding function.

4. The method according to any one of claims 1 to 3, wherein the determining, by a first device, that a first data frame is lost comprises:
when a timer that corresponds to a second data packet and that is maintained by a packet data convergence protocol PDCP entity of the first device expires, and the second data packet is not successfully transmitted, determining, by the PDCP entity of the first device, that the first data frame is lost, wherein the second data packet is a part of or all data packets in the first data frame.

5. The method according to claim 4, wherein that the second data packet is not successfully transmitted meets at least one of the following:
a PDCP service data unit SDU or PDCP protocol data unit PDU corresponding to the second data packet has not been delivered to a radio link control RLC entity;
the PDCP PDU is delivered to the RLC entity, and an RLC SDU corresponding to the PDCP PDU or a segment of the RLC SDU is not sent;
after the RLC SDU corresponding to the PDCP PDU or the segment of the RLC SDU is transmitted most recently, the first device receives an RLC negative acknowledgment NACK corresponding to the RLC SDU or the segment of the RLC SDU; or
after at least one media access control MAC PDU corresponding to the PDCP PDU is transmitted most recently, the first device receives a hybrid automatic repeat request HARQ NACK corresponding to the at least one MAC PDU.

6. The method according to any one of claims 1 to 5, wherein the discarding, by the first device, a first data packet received from an upper layer comprises:
discarding, by the PDCP entity of the first device, the first data packet received from the upper layer.

7. The method according to any one of claims 1 to 5, wherein the discarding, by the first device, a data packet received from an upper layer comprises:
discarding, by a service data adaptation protocol SDAP entity of the first device, the first data packet received from the upper layer.

8. The method according to claim 7, wherein the discarding, by an SDAP entity of the first device, the data packet received from the upper layer comprises:
receiving, by the SDAP entity of the first device, first indication information from the PDCP entity of the first device, wherein the first indication information notifies that the first data frame is lost; and
discarding, by the SDAP entity of the first device based on the first indication information, the first data packet received from the upper layer.

9. The method according to any one of claims 1 to 8, wherein the method further comprises:
sending, by the first device, second indication information to the second device, wherein the second indication information indicates that the first data frame is lost, and the second indication information comprises at least one of the following: data radio bearer DRB information corresponding to the first data frame, QoS flow information corresponding to the first data frame, and a PDCP counter COUNT value or a PDCP serial number SN, wherein the PDCP COUNT or the PDCP serial number SN indicates to update a status variable of a receive window of the second device.

10. A communication apparatus, comprising:
a unit configured to implement the method according to any one of claims 1 to 9.

11. A communication apparatus, comprising a processor, wherein the processor is coupled to a memory, and the processor is configured to execute a computer program stored in the memory, to enable the apparatus to perform the method according to any one of claims 1 to 9.

12. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 9 by using a logic circuit or executing code instructions.

13. A computer-readable storage medium, wherein the storage medium stores a computer program or instructions, and when the computer program or the instructions are executed by a computer, the method according to any one of claims 1 to 9 is implemented.

14. A computer program product, wherein when a computer reads and executes the computer program product, the computer is enabled to perform the method according to any one of claims 1 to 9.

15. A chip, comprising a processor, configured to invoke a computer program from a memory and run the computer program, to enable a communication apparatus on which the chip is installed to perform the method according to any one of claims 1 to 9.
